# FASCICULE DE BREVET EUROPEEN

(11) **EP 2 572 313 B1**
(45) Date de publication et mention de la délivrance du brevet: **25.04.2018**
(21) Numéro de dépôt: 11727238.5
(22) Date de dépôt: 19.05.2011
(51) Int. Cl.: G06F 21/35, G06F 21/32, G06F 21/77, G06Q 20/34, G07F 7/10, H04W 4/00

(54) **ÉQUIPEMENT PORTABLE DE COMMUNICATION, SYSTÈME ET PROCÉDÉ DE COMMUNICATION ENTRE UN TERMINAL LOCAL ET UNE PLURALITÉ D'ÉQUIPEMENTS PORTABLES**
TRAGBARE KOMMUNIKATIONSAUSRÜSTUNG, SYSTEM UND VERFAHREN ZUR KOMMUNIKATION ZWISCHEN EINEM LOKALEN ENDGERÄT UND EINER VIELZAHL TRAGBARER AUSRÜSTUNGEN
PORTABLE COMMUNICATION EQUIPMENT, SYSTEM AND METHOD FOR COMMUNICATING BETWEEN A LOCAL TERMINAL AND A PLURALITY OF PORTABLE EQUIPMENT

(30) Priorité: 20.05.2010 FR 1053937
(43) Date de publication de la demande: 27.03.2013
(73) Titulaire: Natural Security, 59000 Lille (FR)
(72) Inventeur: HOZANNE, Cédric, F-62840 Lorgies (FR); COUROUBLE, Benoît, F-59510 Hem (FR)
(74) Mandataire: Novagraaf Technologies
(86) Numéro de dépôt international: PCT/FR2011/051142
(87) Numéro de publication internationale: WO 2011/144875

(56) Documents cités:
- EP-A1- 1 603 088
- EP-A2- 0 949 595
- EP-A2- 2 065 859
- WO-A1-2009/087311

## Description

L'invention concerne le domaine des équipements, systèmes et procédés de communication. L'invention concerne plus particulièrement un équipement portable de communication, un système et un procédé de communication entre un terminal local et une pluralité d'équipements portables.

Les demandes internationales WO 2005/078647 et WO 2007/100709 décrivent un procédé de communication mettant en oeuvre un équipement portable et un terminal local pour le transfert de données sans contact. L'équipement portable comprend un moyen de mémorisation pour stocker des données contenant un gabarit biométrique, des applications et des moyens de communication sans contact pour la réception et la transmission de données. L'équipement portable comprend également des moyens de traitement pour opérer une comparaison entre le modèle biométrique qu'il stocke et un échantillon biométrique acquis par un capteur biométrique relié au terminal local et reçu depuis des moyens de communication du terminal local. Le terminal local est agencé pour compléter l'établissement d'une session transactionnelle avec l'équipement portable, puis sélectionner l'application de l'équipement portable à appeler, seulement si l'échantillon biométrique correspond au modèle biométrique. L'équipement portable est agencé pour transmettre au terminal local un résultat de l'application appelée par le terminal local.

Ces procédés permettent d'authentifier, pour le terminal local, le porteur de l'équipement portable comme titulaire légitime de cet équipement, afin d'accéder à une application détenue par l'équipement portable, avec un niveau de sécurité accru par exemple par rapport au mode purement déclaratif, et ce sans que le porteur ait à manipuler l'équipement portable. Dans les procédés actuels, le contrôle de l'authenticité du porteur est réalisé pour chaque accès à chacune des applications.

Plusieurs interfaces de communication sans contact sont également connues, pour permettre la télécommunication entre un équipement portable et un terminal local. A titre d'exemples non-exhaustifs, on peut citer les interfaces de proximité pour la communication en champ proche (Near Field Communication - ISO 14443) ou les interfaces de réseaux locaux ou personnels (ISO 802.15.4) Zigbee ou Bluetooth (ISO 802.15.3) ou Ethernet (ISO 802.11x) ou Wi-Fi (ISO 802.11x)). De façon inéluctable, l'utilisation de ces réseaux se généralise et leur zone de couverture croît.

Dans ce contexte, on comprend qu'au fur et à mesure que la zone de couverture du terminal local s'étend et que l'usage d'équipements portables en communication sans contact avec le terminal se généralise, des phénomènes interférentiels ou conflictuels, encore pas ou peu observés, dus à la détection par le terminal local d'une pluralité d'équipements portables dans sa zone de couverture, sont destinés à se multiplier. Parmi ces phénomènes, on peut considérer par exemple le cas d'un porteur qui possède une pluralité d'équipements portables détectés dans la zone de couverture d'un terminal local. On peut encore considérer le cas de plusieurs porteurs possédant chacun au moins un équipement portable et situés dans la zone de couverture d'un même terminal local. De plus, le nombre d'applications détenues dans chaque équipement portable étant toujours croissant, plusieurs desdits équipements portables peuvent détenir plusieurs applications propres à être appelées par le terminal local.

En réponse partielle à l'émergence de ces phénomènes, un blocage applicatif au niveau du terminal local a tout d'abord été proposé qui est réalisé pour ne traiter qu'un seul équipement portable à la fois.

Il a été depuis proposé une autre solution décrite dans la demande internationale WO 2009/087311. Cette demande enseigne un système d'authentification biométrique sans contact et un procédé associé qui résolvent les problèmes liés à la détection par le terminal local d'une pluralité d'équipements portables dans sa zone de couverture, en communiquant à chaque équipement portable détecté l'échantillon biométrique acquis, afin que chacun puisse les comparer au modèle biométrique qu'il stocke, une session transactionnelle étant ouverte entre le terminal local et le ou les seuls équipements portables ayant obtenu un résultat d'authentification positive de l'utilisateur. Un chaînage des transactions applicatives est rendu possible par le procédé selon la demande internationale WO 2009/087311, à l'issue d'une étape de sélection de l'équipement portable à utiliser et des applications de cet équipement compatibles avec le terminal local, c'est-à-dire en aval ou lors d'une procédure d'accès auxdites applications.

Le document EP 1 603 088, 7 décembre 2005 (2005-12-07) décrit un module de sécurité destiné à être utilisé dans un décodeur de télévision.

Le document EP 2 065 859, 3 juin 2009 (2009-06-03) décrit une carte à microprocesseur permettant de différencier le traitement d'application à exigence de sécurité modérée ou forte. La présente invention, qui s'appuie sur ces observations originales, propose une solution applicative permettant de pallier un ou plusieurs des inconvénients précédemment évoqués.

A cette fin, l'invention propose un équipement portable de communication avec un terminal local, l'équipement portable étant associé à un fournisseur de service et à un titulaire et étant utilisé par un utilisateur,
l'équipement portable comprenant au moins :
- un premier support de mémorisation pour stocker au moins une pluralité d'applications,
- des premiers moyens de traitement agencés pour réaliser une transaction applicative avec le terminal local, selon une application parmi ladite pluralité d'applications, et
- des seconds moyens de communication sans contact agencés pour transmettre sans contact des données au terminal local,
l'équipement portable étant **caractérisé en ce qu**'il comprend en outre :
- des seconds moyens de traitement distincts des premiers moyens de traitement et agencés pour réaliser au moins une fonction applicative avec le terminal local, et
- un second support de mémorisation accessible uniquement en écriture pour les seconds moyens de traitement et uniquement en lecture pour les premiers moyens de traitement,
lesdits seconds moyens de traitement étant propres à écrire sur le second support de mémorisation des données représentatives du résultat de ladite au moins une fonction applicative et les premiers moyens de traitement étant propres à lire ces données sur le second support de mémorisation pour réaliser au moins une transaction applicative avec le terminal local selon au moins une application parmi ladite pluralité d'applications.

L'équipement portable permet ainsi le chaînage des transactions applicatives réalisées par les premiers moyens de traitement avec le terminal, la collecte des données nécessaires à ces réalisations étant déléguée aux seconds moyens de traitement qui les stockent sur le second support de mémorisation, en amont de toute procédure d'accès à une application.

Selon une particularité, l'équipement comprend en outre des moyens de communication avec contact via lesquels au moins une transaction applicative avec le terminal local est réalisée par les premiers moyens de traitement selon au moins une application parmi ladite pluralité d'applications.

L'équipement portable conserve ainsi son usage usuel de communication par contact avec le terminal local.

L'invention concerne également un système de communication comprenant un terminal local et une pluralité d'équipements portables, chaque équipement portable étant associé à un fournisseur de service et à un titulaire et étant utilisé par un utilisateur,
le terminal local comprenant au moins :
- un détecteur agencé pour détecter les équipements portables situés dans une zone de couverture du terminal local, et
- des premiers moyens de communication sans contact agencés pour transmettre sans contact des données à chaque équipement portable,
chaque équipement portable comprenant au moins :
- un premier support de mémorisation pour stocker au moins une pluralité d'applications,
- des premiers moyens de traitement agencés pour réaliser une transaction applicative avec le terminal local, selon une application parmi ladite pluralité d'applications, et
- des seconds moyens de communication sans contact agencés pour transmettre sans contact des données au terminal local,
ledit système de communication étant **caractérisé en ce que** chaque équipement portable comprend en outre :
- des seconds moyens de traitement distincts des premiers moyens de traitement et agencés pour réaliser au moins une fonction applicative avec le terminal local, et
- un second support de mémorisation accessible uniquement en écriture pour les seconds moyens de traitement et uniquement en lecture pour les premiers moyens de traitement,
lesdits seconds moyens de traitement étant propres à écrire sur le second support de mémorisation des données représentatives du résultat de ladite au moins une fonction applicative et les premiers moyens de traitement étant propres à lire ces données sur le second support de mémorisation pour réaliser au moins une transaction applicative avec le terminal local selon au moins une application parmi ladite pluralité d'applications.

Le système permet ainsi non seulement de gérer la présence simultanée d'une pluralité d'équipements portables dans la zone de couverture du terminal local, mais également de chaîner les transactions applicatives réalisées par les premiers moyens de traitement avec le terminal, en déléguant aux seconds moyens de traitement la collecte des données nécessaires à leurs réalisations qui sont stockées sur le second support de mémorisation, en amont de toute procédure d'accès à une application.

Selon une particularité, chaque équipement portable comprend en outre des moyens de communication avec contact via lesquels au moins une transaction applicative avec le terminal local est réalisée par les premiers moyens de traitement selon au moins une application parmi ladite pluralité d'applications.

Le système permet ainsi de conserver l'usage usuel de communication par contact de chaque équipement portable avec le terminal local, la sélection de l'équipement portable à utiliser pour réaliser ladite au moins une transaction applicative étant réalisée *de facto.*

Selon une autre particularité, le premier support de mémorisation de chaque équipement portable stocke des données d'authentification de l'équipement portable et du fournisseur de service associé et une première fonction applicative consiste à authentifier l'équipement portable pour le terminal local, au moins sur la base des données d'authentification de l'équipement portable et du fournisseur de service associé.

Le système permet ainsi de vérifier, pour le terminal local, l'authenticité et l'intégrité de chaque équipement portable détecté dans sa zone de couverture, en amont de toute procédure d'accès à une application quelconque parmi la pluralité d'applications stockées sur le premier support de mémorisation de chaque équipement portable.

Selon une autre particularité, le terminal local est propre à ouvrir un canal de communication sans contact entre le terminal local et chaque équipement portable authentifié.

Le système permet ainsi de ne pas communiquer avec des équipements portables corrompus, contrefaits ou répudiés, en amont de toute procédure d'accès à une application quelconque parmi la pluralité d'applications stockées sur le premier support de mémorisation de chaque équipement portable.

Selon une autre particularité, le premier support de mémorisation de chaque équipement portable stocke une liste de la pluralité d'applications qu'il stocke et une seconde fonction applicative consiste au moins à transmettre sans contact la liste des applications au terminal local, le terminal local étant agencé pour sélectionner, parmi les équipements portables avec chacun desquels il a ouvert un canal de communication, les équipements portables possédant au moins une application reconnue par le terminal local.

Ainsi, il est certain que l'équipement portable qui sera sélectionné pour procéder à au moins une transaction applicative avec le terminal local possède au moins une application reconnue par le terminal local, en amont de toute procédure d'accès à une application quelconque parmi la pluralité d'applications stockées sur le premier support de mémorisation de chaque équipement portable.

Selon une autre particularité, le premier support de mémorisation de chaque équipement portable stocke un gabarit représentatif de données d'authentification du titulaire de l'équipement portable et une troisième fonction applicative consiste à authentifier, pour le terminal local, l'utilisateur de cet équipement portable, au moins sur la base des données d'authentification du titulaire de l'équipement portable.

Le système permet ainsi de ne communiquer qu'avec les équipements portables, certes authentifiés, mais également dont l'utilisateur est authentifié comme titulaire légitime, et ceci en amont de toute procédure d'accès à une application quelconque parmi la pluralité d'applications stockées sur le premier support de mémorisation de chaque équipement portable.

Selon une autre particularité, le terminal local est propre à ouvrir une session transactionnelle avec chaque équipement portable authentifié dont l'utilisateur a été authentifié, donnant au terminal local accès à l'application ou aux applications détenues par chacun desdits équipements portables.

Le système permet ainsi d'ouvrir une session transactionnelle avec au moins un équipement portable authentifié de l'utilisateur lui-même authentifié. Une fois la session transactionnelle ouverte avec ledit ou lesdits équipements portables, les seconds moyens de traitement de chacun de ces équipements portables ne jouent plus aucun rôle et deviennent avantageusement transparents pour autoriser l'accès direct pour le terminal local à la ou aux applications détenues par le ou les équipements portables en session transactionnelle avec le terminal local.

Selon une autre particularité, si l'utilisateur authentifié portent plusieurs équipements portables authentifiés, le terminal local soit propose à l'utilisateur de sélectionner l'équipement portable à utiliser pour la transaction, soit le terminal local choisit lui-même l'équipement portable à utiliser pour la transaction quand il possède les données nécessaires pour prendre cette décision.

Le système permet ainsi de sélectionner, si ce n'est pas déjà fait, l'équipement portable à utiliser parmi les équipements portables en session transactionnelle avec le terminal local.

Selon une autre particularité, si l'équipement portable sélectionné détient plusieurs applications reconnues par le terminal local, soit le terminal local propose à l'utilisateur de sélectionner au moins une application, soit le terminal local choisit lui-même au moins une application quand il possède des données pour prendre cette décision, ladite au moins une application sélectionnée étant réalisée par les premiers moyens de traitement qui lisent les données écrites sur le second support de mémorisation par les seconds moyens de traitement afin de réaliser au moins une transaction applicative avec le terminal local au cours d'une session transactionnelle selon ladite au moins une application sélectionnée.

Selon une autre particularité, les seconds moyens de traitement sont propres à effacer les données écrites sur le second support de mémorisation lorsque la communication avec le terminal local est terminée ou interrompue.

Le système permet ainsi d'interdire la traçabilité de l'utilisateur et de garantir son anonymat.

L'invention concerne également un procédé de communication, mis en oeuvre dans un système de communication comprenant un terminal local et une pluralité d'équipements portables, chaque équipement portable étant associé à un fournisseur de services et à un titulaire, et étant utilisé par un utilisateur,
le terminal local comprenant au moins :
- un détecteur agencé pour détecter les équipements portables situés dans une zone de couverture du terminal local, et
- des premiers moyens de communication sans contact agencés pour transmettre sans contact des données à chaque équipement portable, chaque équipement portable comprenant au moins :
- un premier support de mémorisation pour stocker au moins une pluralité d'applications,
- des premiers moyens de traitement agencés pour réaliser une transaction applicative avec le terminal local, selon une application parmi ladite pluralité d'applications, et
- des seconds moyens de communication sans contact agencés pour transmettre sans contact des données au terminal local,
ledit procédé de communication étant **caractérisé en ce qu**'il comprend au moins :
- une première étape de réalisation d'au moins une fonction applicative, chaque équipement portable comprenant en outre des seconds moyens de traitement distincts des premiers moyens de traitement et agencés pour réaliser ladite au moins une fonction applicative,
- une étape d'écriture de données représentatives du résultat de ladite au moins une fonction applicative, chaque équipement portable comprenant en outre un second support de mémorisation accessible uniquement en écriture pour les seconds moyens de traitement, de sorte que l'étape d'écriture est réalisée par les seconds moyens de traitement sur le second support de mémorisation, et
- une étape de lecture des données représentatives du résultat de ladite au moins une fonction applicative, le second support de mémorisation étant accessible uniquement en lecture pour les premiers moyens de traitement, de sorte que l'étape de lecture est réalisée par les premiers moyens de traitement sur le second support de mémorisation pour réaliser au moins une transaction applicative selon au moins une application parmi ladite pluralité d'applications.

Selon une particularité, chaque équipement portable comprenant en outre des moyens de communication avec contact, le procédé comprend en outre une seconde étape de réalisation d'au moins une transaction applicative avec le terminal local, cette étape étant réalisée par les premiers moyens de traitement via les moyens de communication avec contact selon au moins une application parmi ladite pluralité d'applications.

Selon une autre particularité, le premier support de mémorisation de chaque équipement portable stockant en outre des données d'authentification de l'équipement portable et du fournisseur de service associé, la première étape de réalisation comprend une première sous-étape de réalisation d'une première fonction applicative, cette sous-étape consistant à authentifier l'équipement portable pour le terminal, au moins sur la base desdites données d'authentification de l'équipement portable et du fournisseur de service associé.

Selon une autre particularité, le procédé comprend une étape d'ouverture d'un canal de communication réalisée par le terminal local sans contact entre le terminal local et chaque équipement portable authentifié.

Selon une autre particularité, le premier support de mémorisation de chaque équipement portable stockant en outre une liste de la pluralité d'applications qu'il stocke, la première étape de réalisation comprend en outre une seconde sous-étape de réalisation d'une seconde fonction applicative, cette sous-étape consistant au moins à transmettre sans contact au terminal local la liste des applications, le terminal local étant agencé pour sélectionner, parmi les équipements portables avec chacun desquels il a ouvert un canal de communication, uniquement les équipements portables possédant au moins une application reconnue par le terminal local.

Selon une autre particularité, le premier support de mémorisation de chaque équipement portable stockant en outre un gabarit représentatif de données d'authentification du titulaire de l'équipement portable, la première étape de réalisation comprend en outre une troisième sous-étape de réalisation d'une troisième fonction applicative, cette sous-étape consistant à authentifier, pour le terminal local, l'utilisateur de cet équipement portable, au moins sur la base des données d'authentification du titulaire de l'équipement portable.

Selon une autre particularité, le procédé comprend une étape d'ouverture d'une session transactionnelle réalisée par le terminal local avec chaque équipement portable authentifié dont l'utilisateur a été authentifié, donnant au terminal local accès à l'application ou aux applications détenues par chacun desdits équipements portables.

Selon une autre particularité, si l'utilisateur authentifié porte plusieurs équipements portables authentifiés, le procédé comprend en outre une étape de sélection de l'équipement portable à utiliser pour la transaction, cette étape consistant soit en un choix proposé à l'utilisateur par le terminal local, soit en un choix réalisé par le terminal local, lui-même, s'il possède suffisamment de données pour prendre cette décision.

Selon une autre particularité, si l'équipement portable sélectionné détient plusieurs applications reconnues par le terminal local, le procédé comprend en outre une étape de sélection de l'application à réaliser, cette étape consistant soit en un choix proposé à l'utilisateur par le terminal local, soit en un choix réalisé par le terminal local, lui-même, s'il possède suffisamment de données pour prendre cette décision, ladite au moins une application sélectionnée étant réalisée par les premiers moyens de traitement qui lisent les données écrites sur le second support de mémorisation par les seconds moyens de traitement afin de réaliser au moins une transaction applicative avec le terminal local selon ladite au moins une application sélectionnée.

Selon une autre particularité, le procédé comprend une étape d'effacement des données écrites sur le second support de mémorisation par les seconds moyens de traitement lorsque le procédé de communication est terminé ou interrompu.

D'autres caractéristiques et avantages de l'invention ressortiront clairement de la description qui en est faite ci-après, à titre indicatif et nullement limitatif, en référence aux dessins annexés, dans lesquels :
- la figure 1 représente schématiquement le système de communication selon l'invention,
- la figure 2 représente schématiquement un équipement portable tel que sur la figure 1, et
- la figure 3 représente quelques étapes du procédé de communication selon l'invention.

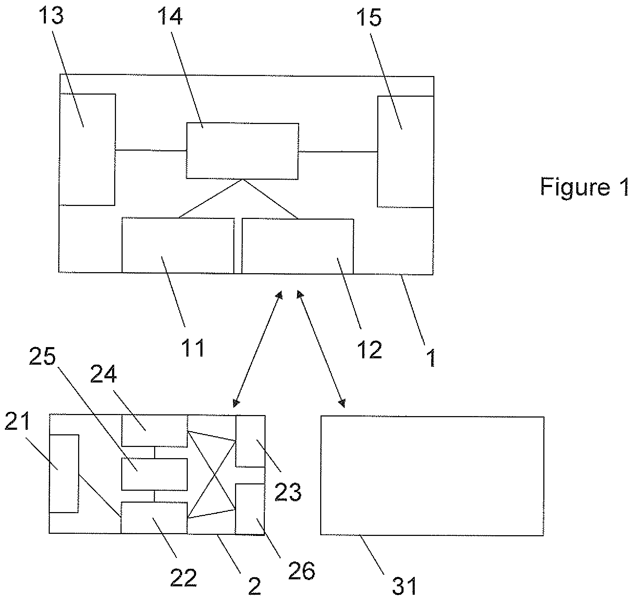

Comme illustré sur la figure 1, le système de communication selon l'invention comprend un terminal local 1 et une pluralité d'équipements portables 2 et 31. Chaque équipement portable est associé à un fournisseur de service et à un titulaire, et est utilisé par un utilisateur.

A titre d'exemples non limitatifs, ledit fournisseur de service est une banque, un fournisseur d'accès à Internet et/ou de téléphonie, une chaîne de magasins ou un organisme public.

Le terminal local 1 comprend au moins :
- un détecteur 11 agencé pour détecter les équipements portables situés dans sa zone de couverture,
- des premiers moyens de communication 12 sans contact agencés pour transmettre sans contact entre le terminal local et chaque équipement portable des données à chaque équipement portable.

Le terminal local 1 comprend en outre :
- des moyens de mesure 13, tels qu'un lecteur biométrique, et
- des moyens de traitement 14.

Dans un premier mode de réalisation, le terminal local 1 est associé à un système de caisse dans un magasin tel qu'un supermarché. Dans cet exemple, le terminal local peut en outre comprendre :
- une mémoire de stockage temporaire,
- un afficheur alphanumérique,
- un clavier,
- une imprimante à facturette, et
- des modules logiciels tels que le paramétrage et la remontée des alarmes.

Le système de caisse, en liaison avec le terminal local, peut comprendre en particulier :
- une interface homme-machine avec le personnel de caisse,
- une imprimante chèque,
- une imprimante ticket,
- un afficheur alphanumérique,
- un scanner code-barres,
- des modules logiciels de calcul du montant et de sélection du mode de paiement, et
- un clavier caisse.

Les premiers moyens de communication 12 sans contact du terminal local comprennent un module de communication radiofréquence basé sur au moins une des normes ISO mentionnées en introduction, et plus particulièrement sur la norme ISO 802.15.4. Il est à noter que, pour cette dernière, la fréquence utilisée est une fréquence ultra-haute dans la bande des 2,4 GHz. Une telle fréquence est bien adaptée pour des communications sans contact basse consommation sur des distances inférieures à 10 mètres, et plus particulièrement comprises entre 50 centimètres et 3 mètres. En outre, les premiers moyens de communication sans contact 12 du terminal local intègrent un algorithme anti-collision de sorte que le terminal local puisse communiquer avec chaque équipement portable détecté lorsqu'une pluralité d'équipements portables, est située dans sa zone de couverture. Le système permet ainsi de gérer la présence simultanée d'une pluralité d'équipements portables dans la zone de couverture du terminal local. La norme 802.15.4 permet d'avoir dans la même zone jusqu'à 65536 équipements différents. Une autre avantage de l'utilisation de la norme 802.15.4 est que cette norme est particulièrement résistante au perturbation du à l'utilisation d'autres normes dans la même gamme de fréquence des 2,4 Ghz.

Dans le premier mode de réalisation, les moyens de mesure comprenant le lecteur biométrique sont propres à acquérir une image biométrique d'un utilisateur, par exemple une image du réseau veineux d'un doigt ou de la main de l'utilisateur.

Les moyens de traitement 14 du terminal local comprennent un ou plusieurs microcontrôleurs ou microprocesseurs ou processeurs.

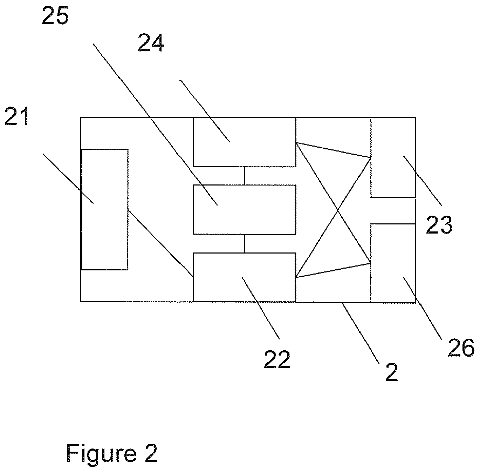

Comme illustré sur la figure 2, chaque équipement portable 2 comprend au moins :
- un premier support de mémorisation 21,
- des premiers moyens de traitement 22,
- des seconds moyens de communication sans contact 23,
- des seconds moyens de traitement 24, et
- un second support de mémorisation 25.

Parmi les équipements portables 2, nous pouvons citer les équipements aux formats suivants : carte bancaire, porte-monnaie électronique, équipement embarquant une carte SIM (Subscriber Identification Module), ou une carte mémoire type SD (Secure Digital), xD, MMC (Multimedia Memory Card), USB (Universal Serial Bus), PCMCIA (Personal Computer Memory Card International Association), ...

Le premier support de mémorisation 21 de chaque équipement portable correspond par exemple à une mémoire EEPROM. Il stocke au moins une pluralité d'applications. Il stocke en outre une liste desdites applications, un gabarit représentatif de données d'authentification du titulaire de l'équipement portable, des données d'authentification de l'équipement portable, par exemple une adresse MAC, et des données d'authentification du fournisseur de service associé à l'équipement portable, par exemple un certificat du fournisseur de service de l'équipement portable.

Les premiers moyens de traitement 22 de chaque équipement portable sont agencés pour réaliser une transaction applicative avec le terminal local au cours d'une session transactionnelle.

Les moyens de communication sans contact 23 de chaque équipement portable sont agencés pour transmettre sans contact entre cet équipement portable et le terminal local des données au terminal local. Ils comprennent au moins un module de communication radiofréquence basée sur au moins une des normes ISO mentionnées en introduction, et plus particulièrement sur la norme ISO 802.15.4.

Pour chaque équipement portable, le gabarit représentatif de données d'authentification du titulaire, l'adresse MAC et le certificat du fournisseur de service sont stockés sur le premier support de mémorisation de cet équipement portable lors de l'acte d'achat ou d'un renouvellement de ce dernier. La pluralité d'applications détenue par chaque équipement portable a, quant à elle, aussi bien pu être stockée sur le premier support de mémorisation lors de l'acte d'achat ou d'un renouvellement de l'équipement portable, qu'être (télé)chargée et/ou enrichie postérieurement à l'acte d'achat ou de renouvellement par l'utilisateur ou le personnel du fournisseur de service. La liste correspondante des applications est mise à jour par les premiers ou seconds moyens de traitement à chaque ajout ou suppression ou mise à jour d'applications.

Il est important de noter que les seconds moyens de traitement 24 de chaque équipement portable sont distincts des premiers moyens de traitement 22, cette caractéristique et ses avantages étant discutés plus bas.

Lesdits seconds moyens de traitement 24 de chaque équipement portable permettent de réaliser au moins une fonction applicative avec le terminal local.

Ledit second support de mémorisation est accessible uniquement en écriture pour les seconds moyens de traitement, lors d'une étape d'écriture 7. Le second support de mémorisation est également accessible uniquement en lecture pour les premiers moyens de traitement, lors d'une étape de lecture 9. Le second support de mémorisation correspond par exemple à une mémoire SRAM ou DRAM.

Les seconds moyens de traitement sont ainsi propres à écrire sur le second support de mémorisation des données représentatives du résultat de ladite au moins une fonction applicative et les premiers moyens de traitement sont propres à lire ces données sur le second support de mémorisation pour réaliser au moins une transaction applicative avec le terminal local selon au moins une application parmi ladite pluralité d'applications.

Le système permet ainsi de collecter, pour chaque équipement portable et en amont de toute procédure d'accès à une application, les données nécessaires à la réalisation d'au moins une application quelconque parmi la pluralité d'applications. En effet, ces données sont collectées comme résultantes d'au moins une fonction applicative réalisée par les seconds moyens de traitement. Elles sont mises à la disposition des premiers moyens de traitement sur le second support de mémorisation. Ainsi, plusieurs transactions applicatives avec le terminal local peuvent être réalisées consécutivement en bénéficiant des données collectées. Le chaînage des transactions applicatives avec le terminal est donc rendu possible.

De plus, à la réalisation de chaque application peut être associé un niveau de sécurité requis, correspondant par exemple à la nécessité ou non de collecter telles ou telles données. Ainsi, la réalisation d'une première application de haut niveau de sécurité peut permettre la réalisation d'au moins une seconde application de même ou moindre niveau de sécurité, par exemple sans même nécessité une nouvelle étape de lecture 9. En effet, ladite au moins une seconde application est réalisée sans nécessité de contrôles additionnels du seul fait de la réalisation préalable de la première application.

L'équipement portable comprend en outre des moyens de communication avec contact 26, par exemple une interface de contact de type carte à puce, et/ou une batterie pour alimenter ses moyens de communication et ses premiers et seconds moyens de traitement. La batterie pourra éventuellement être rechargée lors d'un contact de l'interface de contact avec le lecteur de carte à puce relié au terminal local. Le système permet ainsi de conserver l'usage usuel de communication par contact de chaque équipement portable avec le terminal local. Dans le cas où les moyens de communication avec contact d'un équipement portable sont sollicités, les seconds moyens de traitement conservent leur rôle de collecteur de données pour permettre aux premiers moyens de traitement d'en bénéficier, de façon à permettre le chaînage des applications. Toutefois, la sollicitation des moyens de communication avec contact 26 induit que la sélection de l'équipement portable à utiliser pour réaliser ladite au moins une transaction applicative est réalisée *de facto*, la réalisation d'au moins une transaction applicative avec le terminal via les moyens de communication avec contact étant prioritaire sur la réalisation d'au moins une transaction applicative avec le terminal via les seconds moyens de communication sans contact du même équipement portable ou de tout autre équipement portable.

Le premier support de mémorisation 21 de chaque équipement portable stockant des données d'authentification de l'équipement portable et du fournisseur de service associé, une première fonction applicative consiste à authentifier l'équipement portable pour le terminal local, au moins sur la base des données d'authentification de l'équipement portable et du fournisseur de service associé. Le système permet ainsi de vérifier, pour le terminal local, l'authenticité et l'intégrité de chaque équipement portable détecté dans sa zone de couverture. L'algorithme mis en oeuvre pour l'authentification de l'équipement portable est un mécanisme statique d'authentification (SDA ou « Static Data Authentication » selon la terminologie anglaise) ou un mécanisme dynamique d'authentification (DDA ou « Dynamic Data Authentication » selon la terminologie anglaise).

Il est à noter qu'en sus de l'authentification de chaque équipement portable pour le terminal local, il est tout à fait envisageable d'authentifier le terminal local pour chaque équipement portable.

Dans le premier mode de réalisation, le terminal local est agencé pour ouvrir un canal de communication sans contact seulement avec chaque équipement portable ayant été authentifié, lors d'une étape d'ouverture d'un canal de communication 6.

Le système permet ainsi de ne pas communiquer avec des équipements portables corrompus, contrefaits ou répudiés. L'authentification pour le terminal de chaque équipement portable parmi la pluralité d'équipements portables détectés dans sa zone de couverture constitue donc une première sélection d'équipements portables parmi la pluralité d'équipements portables détectés par le détecteur du terminal local.

Le système comprend des moyens de sécurisation de chaque canal de communication ouvert entre le terminal local et chaque équipement portable authentifié, par exemple à l'aide de certificats de type PKI, de clés publiques et de clés privées. Un échange de clés publiques a lieu entre le terminal local et chacun des équipements portables authentifiés. Tous les équipements portables et le terminal local possèdent donc en mémoire un couple clé privée / clé publique qui leur est propre, afin de permettre d'ouvrir un canal de communication sécurisée entre chaque équipement portable authentifié et le terminal local.

Dans le premier mode de réalisation, les premiers moyens de communication 12 du terminal local sont agencés pour transmettre sans contact une requête à chaque équipement portable avec lequel il a ouvert un canal de communication. Ladite requête requiert la transmission par chaque équipement portable considéré de la liste des applications qu'il détient. Les seconds moyens de traitement de chaque équipement portable sont agencés pour transmettre sans contact la liste d'applications au terminal local via les seconds moyens de communication sans contact 23, en réponse à ladite requête. Les moyens de traitement du terminal local sont agencés pour sélectionner parmi la pluralité d'équipements portables avec chacun desquels il a ouvert un canal de communication uniquement les équipements portables possédant au moins une application reconnue par le terminal local. Ainsi, il est certain que l'unique équipement portable qui sera sélectionné pour procéder à une transaction applicative possède au moins une application reconnue par le terminal local.

Il faut ajouter ici que le terminal local peut également connaître l'application qu'il souhaite réaliser, et conséquemment, garder, parmi la pluralité d'équipements portables avec chacun desquels il a ouvert un canal de communication, seulement les équipements portables détenant cette application déterminée.

Dans le premier mode de réalisation, le terminal local associé au système de caisse est dédié aux paiements d'achats effectués par l'utilisateur. Le terminal local sélectionne alors les équipements portables avec lesquels il est apte à réaliser le paiement des achats, c'est-à-dire les équipements portables possédant au moins une application de paiement. De plus, le terminal local peut accepter le paiement des achats par exemple avec des cartes de paiement fournies par la société « A » ou la société « B », mais pas avec des cartes de paiement fournies par la société « C ». Dans ce cas, le terminal local garde le canal de communication ouvert seulement avec les cartes de paiement fournies par les sociétés « A » et « B », et ferme le canal ou les canaux de communication, ou reste muet, avec la carte ou les cartes de paiement fournie par la société « C ».

Dans le premier mode de réalisation, les seconds moyens de traitement 24 de chaque équipement portable authentifié permettent d'authentifier l'utilisateur de cet équipement portable authentifié pour le terminal local.

Pour ce faire, les moyens de mesure 13 du terminal local sont agencés pour acquérir des informations d'authentification de l'utilisateur et les moyens de traitement 14 du terminal local sont agencés pour générer des données d'authentification correspondantes. Ces dernières sont transmises par les premiers moyens de communication 12 du terminal local sans contact via chaque canal de communication à chaque équipement portable authentifié. Puis, les seconds moyens de traitement 24 de chaque équipement portable authentifié comparent les données d'authentification transmises par le terminal local avec le gabarit qu'il stocke et génèrent en cas de comparaison positive des données d'authentification positive. Alors, les moyens de communication sans contact 23 de chaque équipement portable authentifié dont l'utilisateur a été authentifié transmettent sans contact les données d'authentification positive au terminal local.

Dans le premier mode de réalisation, la mémoire EEPROM de chaque équipement portable comprend plusieurs gabarits représentatifs de données d'authentification du titulaire de l'équipement portable, ces gabarits étant adaptés aux informations susceptibles d'être générées par les moyens de mesure usuels. En particulier, si les moyens de mesure du terminal local comprennent un lecteur biométrique pour acquérir une image du réseau veineux d'un des doigts de l'utilisateur, la mémoire EEPROM de chaque équipement portable doit comprendre au moins le gabarit de l'image du réseau veineux de chaque doigt de l'utilisateur. De plus, les seconds moyens de traitement de chaque équipement portable sont agencés pour comparer ce gabarit à l'image captée par les moyens de mesure du terminal local et transmis à l'équipement portable par les premiers moyens de communication sans contact. Plus particulièrement, le gabarit est représentatif de données d'authentification du titulaire qui peuvent correspondre à un condensat d'une image biométrique, ce condensat étant obtenu par exemple à partir d'une fonction de hashage déterminée au niveau du fournisseur de service et appliquée à une image biométrique. De son côté, le terminal local peut appliquer grâce à ses moyens de traitement une fonction de hashage identique à celle appliquée au niveau du fournisseur de service, de façon à ne plus comparer les images biométriques, mais les seuls condensats obtenus à partir de ces images. Au besoin, ladite fonction de hashage peut être déterminée par le terminal local à l'aide de l'adresse MAC de l'équipement mobile et/ou du certificat du fournisseur de service.

Le terminal local ouvre une session transactionnelle sans contact seulement avec chaque équipement portable authentifié dont l'utilisateur a été authentifié, lors d'une étape d'ouverture d'une session transactionnelle 8. Cette étape donne au terminal local accès à l'application ou aux applications détenues par chacun desdits équipements portables. Ainsi, le terminal local accède directement à l'application ou aux applications détenues par chacun desdits équipements portables.

Le système permet ainsi d'authentifier l'utilisateur de l'équipement portable comme titulaire légitime du ou des équipements portables qu'il porte et d'ouvrir une session transactionnelle seulement avec le ou les équipements portables authentifiés de l'utilisateur authentifié, en amont de toute procédure d'accès à une application. Une fois la session transactionnelle ouverte avec ledit ou lesdits équipements portables, les seconds moyens de traitement 24 de chacun de ces équipements portables ne jouent plus aucun rôle et deviennent avantageusement transparents pour les premiers moyens de traitement qui prennent le relais pour réaliser une procédure d'accès à au moins une application. Cette procédure d'accès consiste à autoriser l'accès direct pour le terminal local à l'application ou aux applications détenues par le ou les équipements portables en session transactionnelle avec le terminal local, sur la base des données précédemment écrites par les seconds moyens de traitement sur le second support de mémorisation. La caractéristique de transparence des seconds moyens de traitement de chaque équipement portable est rendue possible par le fait que les premiers et seconds moyens de traitement de chaque équipement portable sont distincts entre eux.

Dans un mode de réalisation, les seconds moyens de traitements comprennent des moyens d'interruption et/ou de mise en fonctionnement des premiers moyens de traitement au moins pour coordonner l'accès au second support de mémorisation en écriture pour les seconds moyens de traitement ou en lecture pour les premiers moyens de traitement. Ces moyens d'interruption et/ou de mise en fonctionnement consistent en un sémaphore, un moniteur ou une barrière de synchronisation, par exemple constituée de deux sémaphores, et d'une variable, par exemple stockée sur le second support de mémorisation. Ces moyens d'interruption et/ou de mise en fonctionnement sont agencés de sorte d'interrompre les seconds moyens de traitement et mettre en fonctionnement les premiers moyens de traitement, lorsque les seconds moyens de traitement ont accompli les tâches, ou ladite au moins une fonction applicative, dont il a la charge, la variable étant un drapeau ou le nombre de tâches qui échoient aux seconds moyens de traitement. Dans une variante, les premiers moyens de traitements comprennent également des moyens d'interruption et/ou de mise en fonctionnement des seconds moyens de traitement. Ces moyens d'interruption et/ou de mise en fonctionnement peuvent être agencés de sorte d'interrompre les premiers moyens de traitement et mettre en fonctionnement les seconds moyens de traitement, lorsque les premiers moyens de traitement ont accompli les tâches, ou ladite au moins une transaction applicative, dont ils ont la charge, de sorte par exemple que les seconds moyens de traitement effacent les données qu'ils ont préalablement écrites sur le second support de mémorisation.

Si les moyens de communication avec contact d'un équipement portable sont sollicités, le terminal ouvre une session transactionnelle par contact avec cet équipement portable. Comme dit précédemment, la sélection de l'équipement portable est réalisée *de facto*, une seule session transactionnelle étant ouverte. Toutefois, il peut demeurer la nécessité de sélectionner au moins une application parmi la pluralité d'applications stockées sur le premier support de mémorisation dudit équipement portable.

Si l'utilisateur authentifié portent plusieurs équipements portables authentifiés possédant chacun au moins une application reconnue par le terminal local, soit le terminal local choisit lui-même l'équipement quand il possède des données pour prendre cette décision, soit le terminal local propose à l'utilisateur de sélectionner l'équipement portable à utiliser pour la transaction (via à titre d'exemple un Label personnalisé dans chaque équipement portable).

Le système selon l'invention permet ainsi de sélectionner l'unique équipement portable à utiliser parmi le ou les équipements portables en session transactionnelle sans contact avec le terminal local.

Dans le premier mode de réalisation, l'utilisateur peut avoir été authentifié comme titulaire légitime d'une carte de paiement fournie par la société « A » et d'une carte de paiement fournie par la société « B ». Le terminal local peut alors se référer à une règle de priorité pour déterminer avec laquelle de ces deux cartes de paiement réaliser le paiement. Ladite règle de priorité peut être définie de différentes façons. Par exemple, elle peut être définie de façon interne au terminal local ou définie conjointement avec la liste des applications stockée par chacune des deux cartes. Si la règle de priorité est inexistante ou ne permet pas de choisir, le terminal local propose à l'utilisateur via le système de caisse de sélectionner lui-même la carte de paiement qu'il souhaite utiliser. Ce choix rendu à l'utilisateur est réalisé par exemple par un affichage sur l'écran alphanumérique ou sur un écran tactile du système de caisse. En effet, l'écran tactile peut être agencé pour être vu de l'utilisateur ou du personnel de caisse et pour afficher une image représentant les deux cartes, l'utilisateur ou le personnel de caisse appuyant sur la représentation de la carte de paiement à utiliser.

Si l'équipement portable sélectionné détient plusieurs applications reconnues par le terminal local, soit le terminal local choisit lui-même au moins une application à réaliser quand il possède des données pour prendre cette décision, soit le terminal local propose à l'utilisateur de sélectionner au moins une application à réaliser. Ladite au moins une application sélectionnée est réalisée par les premiers moyens de traitement 22 de l'équipement portable sélectionné pour réaliser une transaction applicative avec le terminal local au cours d'une même session transactionnelle.

Dans le premier mode de réalisation, certaines cartes de paiement proposent soit un paiement comptant, soit un paiement différé. Le système permet de procéder tel que dans l'exemple décrit ci-dessus pour choisir entre un paiement comptant ou un paiement différé. L'idée est de ne soumettre le choix à l'utilisateur qu'en ultime recours pour que le système soit le plus transparent possible pour l'utilisateur.

Dans le premier mode de réalisation, le système comprend en outre un sous-système de monétique et de services pour effectuer les transactions de paiement, et plus généralement, toute transaction de service. Ce sous-système gère en particulier la relation avec le serveur bancaire. Le sous-système de monétique et de services est constitué de composants logiciels s'exécutant sur les cartes et sur le terminal local. Il réalise notamment les fonctions d'autorisation ou de refus de paiement, de mise en oeuvre de la transaction de paiement et, plus généralement, de mise en oeuvre des transactions de service. S'il s'agit d'une transaction de service, alors le déroulement de la transaction est spécifique au service considéré.

Comme divulgué plus haut, grâce à l'équipement de communication, au système et au procédé de communication entre un terminal local et une pluralité d'équipements portables selon l'invention, il est possible de chaîner plusieurs transactions applicatives au cours d'une même session transactionnelle, comme suite à au moins une étape de lecture 9. Par exemple, un paiement peut être suivi d'une transaction de fidélité, les données nécessairement collectées pour la réalisation du paiement offrant un haut niveau de sécurité peuvent autorisant par là même une transaction de fidélité d'un niveau de sécurité moins exigeant. Si la transaction de service ne peut être menée à son terme, il est envisagé de pouvoir revenir à l'état initial précédant la transaction.

Ainsi, un avantage du système est de ne pas requérir, une fois sélectionné l'unique équipement portable d'un utilisateur, une authentification quelconque pour permettre la réalisation de la transaction applicative, l'authentification dudit équipement portable et l'authentification de son utilisateur ayant d'ores et déjà été réalisées une fois pour toutes les transactions applicatives à réaliser au cours d'une même session transactionnelle.

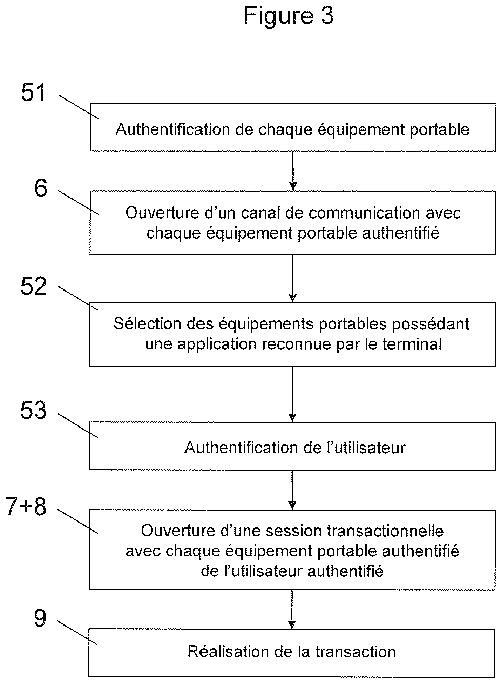

Ainsi, le procédé selon l'invention comprend une première étape de réalisation d'au moins une fonction applicative. Comme illustré sur la figure 3, la première étape de réalisation consiste au moins en :
- une première sous-étape de réalisation 51 d'une première fonction applicative, cette sous-étape consistant à authentifier l'équipement portable pour le terminal, au moins sur la base de données d'authentification de l'équipement portable et du fournisseur de service associé,
- une seconde sous-étape de réalisation 52 d'une seconde fonction applicative, cette sous-étape consistant au moins à transmettre sans contact au terminal local la liste des applications, le terminal local étant agencé pour sélectionner, parmi les équipements portables avec chacun desquels il a ouvert un canal de communication, uniquement les équipements portables possédant des applications reconnues par le terminal local,
- une troisième sous-étape de réalisation 53 d'une troisième fonction applicative, cette sous-étape consistant à authentifier, pour le terminal local, l'utilisateur de cet équipement portable, au moins sur la base des données d'authentification du titulaire de l'équipement portable.

Il est à noter que l'étape d'écriture 7 est réalisée au moins entre la première étape de réalisation 5 et l'étape d'ouverture d'une session transactionnelle 8. Plus particulièrement, l'étape d'écriture 7 peut être réalisée après chaque sous-étape de réalisation pour écrire les données résultantes de chaque sous-étape de réalisation ou après la dernière sous-étape de réalisation pour écrire en une seule fois les données résultantes de toutes les sous-étapes de réalisation.

Il est à noter que les premiers et seconds moyens de traitement de chaque équipement portable ne jouent pas le même rôle, les premiers réalisant avec le terminal local au moins une application parmi la pluralité d'applications stockées sur le premier support de mémorisation et les seconds réalisant au moins une fonction applicative pour collecter les données nécessaires à la réalisation d'au moins une application parmi la pluralité d'applications stockées sur le premier support de mémorisation. Cette caractéristique justifie que lesdits premiers et seconds moyens de traitement puissent être différents l'un de l'autre, car les capacités de traitement que doit posséder chacun desdits premiers et seconds moyens de traitement dépendent des tâches que chacun d'entre eux a à accomplir, les tâches qui échoient aux premiers moyens de traitement étant différentes des tâches qui échoient aux seconds moyens de traitement. Il est à noter que le rôle joué par les premiers moyens de traitement de chaque équipement portable n'est pas, pour autant, limité à l'unique étape de réalisation d'au moins une transaction selon au moins une application.

Le procédé comprend en outre une étape d'effacement des données écrites sur le second support de mémorisation par les seconds moyens de traitement lorsque le procédé de communication est terminé ou interrompu. Le système et le procédé permet ainsi d'interdire toute traçabilité de l'utilisateur et de garantir son anonymat.

Il est à noter qu'un équipement portable avec lequel le terminal local ne communique plus du fait que cet équipement portable ne détient aucune application reconnue par le terminal local peut appartenir légitimement à l'utilisateur authentifié.

Le système et le procédé présentent l'avantage de s'adapter automatiquement à tous les cas d'usage. Ils présentent également l'avantage de ne requérir qu'une légère et peu onéreuse modification des systèmes de communication connus. Cette modification concerne essentiellement les équipements portables à leur niveau applicatif, mais surtout matériel. Cette modification consiste effectivement en l'ajout desdits seconds moyens de traitement et dudit second support de mémorisation aux équipements portables connus. Cet ajout peut en outre être réalisé quelque soit l'équipement portable, même si celui-ci n'autorise pas de communication sans contact, que ce soit avec le terminal local ou un autre équipement. Autrement dit, cet ajout peut être effectué directement au niveau de la conception des moyens de traitement destinés à équiper tous les types d'équipements portables. Cet avantage découle du fait que lesdits seconds moyens de traitement sont agencés pour être transparents lors d'une session transactionnelle. Ainsi, les ajouter aux premiers moyens de traitement équipant déjà tous les équipements portables ne préjuge pas de leur usage systématique. Par exemple, dans le cas usuel d'une transaction applicative avec contact entre l'équipement portable et le terminal local, les premiers moyens de traitement de l'équipement portable peuvent suffire pour aboutir à la réalisation d'une transaction applicative, les seconds moyens de traitement restant transparents.

Il est à noter que, si l'on a considéré dans le premier mode de réalisation de l'invention une transaction de paiement, le système et le procédé de communication ne sont nullement limités à cette transaction particulière.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Équipement portable (2) de communication avec un terminal local (1), l'équipement portable étant associé à un fournisseur de service et à un titulaire et étant utilisé par un utilisateur,
l'équipement portable comprenant au moins :
- un premier support de mémorisation (21) pour stocker au moins une pluralité d'applications,
- des premiers moyens de traitement (22) agencés pour réaliser une transaction applicative avec le terminal local, selon une application parmi ladite pluralité d'applications, et
- des seconds moyens de communication sans contact (23) agencés pour transmettre sans contact des données au terminal local,
l'équipement portable étant **caractérisé en ce qu**'il comprend en outre :
- des seconds moyens de traitement (24) distincts des premiers moyens de traitement et agencés pour réaliser au moins une fonction applicative avec le terminal local, et
- un second support de mémorisation (25) accessible uniquement en écriture pour les seconds moyens de traitement et uniquement en lecture pour les premiers moyens de traitement,
lesdits seconds moyens de traitement (24) étant propres à écrire sur le second support de mémorisation des données représentatives du résultat de ladite au moins une fonction applicative et les premiers moyens de traitement (22) étant propres à lire ces données sur le second support de mémorisation pour réaliser au moins une transaction applicative avec le terminal local selon au moins une application parmi ladite pluralité d'applications.

2. Équipement portable de communication selon la revendication 1, **caractérisé en ce qu**'il comprend en outre des moyens de communication avec contact (26) via lesquels au moins une transaction applicative avec le terminal local est réalisée par les premiers moyens de traitement selon au moins une application parmi ladite pluralité d'applications.

3. Système de communication comprenant un terminal local (1) et une pluralité d'équipements portables (2, 31), chaque équipement portable étant associé à un fournisseur de service et à un titulaire et étant utilisé par un utilisateur,
le terminal local (1) comprenant au moins :
- un détecteur (11) agencé pour détecter les équipements portables situés dans une zone de couverture du terminal local, et
- des premiers moyens de communication sans contact (12) agencés pour transmettre sans contact des données à chaque équipement portable, chaque équipement portable (2) comprenant au moins :
- un premier support de mémorisation (21) pour stocker au moins une pluralité d'applications,
- des premiers moyens de traitement (22) agencés pour réaliser une transaction applicative avec le terminal local, selon une application parmi ladite pluralité d'applications, et
- des seconds moyens de communication sans contact (23) agencés pour transmettre sans contact des données au terminal local,
ledit système de communication étant **caractérisé en ce que** chaque équipement portable comprend en outre :
- des seconds moyens de traitement (24) distincts des premiers moyens de traitement et agencés pour réaliser au moins une fonction applicative avec le terminal local, et
- un second support de mémorisation (25) accessible uniquement en écriture pour les seconds moyens de traitement et uniquement en lecture pour les premiers moyens de traitement,
lesdits seconds moyens de traitement (24) étant propres à écrire sur le second support de mémorisation des données représentatives du résultat de ladite au moins une fonction applicative et les premiers moyens de traitement (22) étant propres à lire ces données sur le second support de mémorisation pour réaliser au moins une transaction applicative avec le terminal local selon au moins une application parmi ladite pluralité d'applications.

4. Système de communication selon la revendication 3, **caractérisé en ce que** chaque équipement portable comprend en outre des moyens de communication avec contact (26) via lesquels au moins une transaction applicative avec le terminal local est réalisée par les premiers moyens de traitement selon au moins une application parmi ladite pluralité d'applications.

5. Système de communication selon la revendication 3 ou la revendication 4, **caractérisé en ce que** le premier support de mémorisation (21) de chaque équipement portable stocke des données d'authentification de l'équipement portable et du fournisseur de service associé et une première fonction applicative consiste à authentifier l'équipement portable pour le terminal local, au moins sur la base des données d'authentification de l'équipement portable et du fournisseur de service associé.

6. Système de communication selon l'une des revendications 3 à 5, **caractérisé en ce que** le terminal local est propre à ouvrir un canal de communication sans contact entre le terminal local et chaque équipement portable authentifié.

7. Système de communication selon l'une des revendications 3 à 6, **caractérisé en ce que** le premier support de mémorisation (21) de chaque équipement portable stocke une liste de la pluralité d'applications qu'il stocke et une seconde fonction applicative consiste au moins à transmettre sans contact la liste des applications au terminal local, le terminal local étant agencé pour sélectionner, parmi les équipements portables avec chacun desquels il a ouvert un canal de communication, les équipements portables possédant au moins une application reconnue par le terminal local.

8. Système de communication selon l'une des revendications 3 à 7, **caractérisé en ce que** le premier support de mémorisation (21) de chaque équipement portable stocke un gabarit représentatif de données d'authentification du titulaire de l'équipement portable et une troisième fonction applicative consiste à authentifier, pour le terminal local, l'utilisateur de cet équipement portable, au moins sur la base des données d'authentification du titulaire de l'équipement portable.

9. Système de communication selon la revendication 8, **caractérisé en ce que** le terminal local est propre à ouvrir une session transactionnelle avec chaque équipement portable authentifié dont l'utilisateur a été authentifié, donnant au terminal local accès à l'application ou aux applications détenues par chacun desdits équipements portables.

10. Système de communication selon la revendication 9, **caractérisé en ce que**, si l'utilisateur authentifié portent plusieurs équipements portables authentifiés, le terminal local (1) soit propose à l'utilisateur de sélectionner l'équipement portable à utiliser pour la transaction, soit le terminal local choisit lui-même l'équipement portable à utiliser pour la transaction quand il possède des données pour prendre cette décision.

11. Système de communication selon la revendication 9 ou la revendication 10, **caractérisé en ce que**, si l'équipement portable sélectionné détient plusieurs applications reconnues par le terminal local, soit le terminal local propose à l'utilisateur de sélectionner au moins une application, soit le terminal local choisit lui-même au moins une application quand il possède des données pour prendre cette décision, ladite au moins une application sélectionnée étant réalisée par les premiers moyens de traitement (22) qui lisent les données écrites sur le second support de mémorisation par les seconds moyens de traitement afin de réaliser au moins une transaction applicative avec le terminal local selon ladite au moins une application sélectionnée.

12. Système de communication selon l'une quelconque des revendications précédentes, **caractérisé en ce que** les seconds moyens de traitement sont propres à effacer les données écrites sur le second support de mémorisation lorsque la communication avec le terminal local est terminée ou interrompue.

13. Procédé de communication, mis en oeuvre dans un système de communication comprenant un terminal local (1) et une pluralité d'équipements portables (2, 31), chaque équipement portable étant associé à un fournisseur de services et à un titulaire, et étant utilisé par un utilisateur,
le terminal local (1) comprenant au moins :
- un détecteur (11) agencé pour détecter les équipements portables situés dans une zone de couverture du terminal local, et
- des premiers moyens de communication sans contact (12) agencés pour transmettre sans contact des données à chaque équipement portable, chaque équipement portable (2) comprenant au moins :
- un premier support de mémorisation (21) pour stocker au moins une pluralité d'applications,
- des premiers moyens de traitement (22) agencés pour réaliser une transaction applicative avec le terminal local, selon une application parmi ladite pluralité d'applications, et
- des seconds moyens de communication sans contact (23) agencés pour transmettre sans contact des données au terminal local,
ledit procédé de communication étant **caractérisé en ce qu'**il comprend au moins :
- une première étape de réalisation d'au moins une fonction applicative, chaque équipement portable comprenant en outre des seconds moyens de traitement (24) distincts des premiers moyens de traitement (22) et agencés pour réaliser ladite au moins une fonction applicative,
- une étape d'écriture (7) de données représentatives du résultat de ladite au moins une fonction applicative, chaque équipement portable comprenant en outre un second support de mémorisation accessible uniquement en écriture pour les seconds moyens de traitement, de sorte que l'étape d'écriture est réalisée par les seconds moyens de traitement sur le second support de mémorisation, et
- une étape de lecture (9) des données représentatives du résultat de ladite au moins une fonction applicative, le second support de mémorisation étant accessible uniquement en lecture pour les premiers moyens de traitement, de sorte que l'étape de lecture est réalisée par les premiers moyens de traitement sur le second support de mémorisation pour réaliser au moins une transaction applicative selon au moins une application parmi ladite pluralité d'applications.

14. Procédé de communication selon la revendication 13, **caractérisé en ce que**, chaque équipement portable comprenant en outre des moyens de communication avec contact (26), le procédé comprend en outre une seconde étape de réalisation d'au moins une transaction applicative avec le terminal local, cette étape étant réalisée par les premiers moyens de traitement via les moyens de communication avec contact et selon au moins une application parmi ladite pluralité d'applications.

15. Procédé de communication selon la revendication 13 ou la revendication 14, **caractérisé en ce que** la première étape de réalisation comprend une première sous-étape de réalisation (51) d'une première fonction applicative, cette sous-étape consistant à authentifier l'équipement portable pour le terminal, au moins sur la base de données d'authentification de l'équipement portable et du fournisseur de service associé, ces données étant stockées sur le premier support de mémorisation de chaque équipement portable.

16. Procédé de communication selon la revendication 15, **caractérisé en ce qu'**il comprend une étape d'ouverture d'un canal de communication (6) réalisée par le terminal local sans contact entre le terminal local et chaque équipement portable authentifié.

17. Procédé de communication selon la revendication 16, **caractérisé en ce** qu**e**, le premier support de mémorisation de chaque équipement portable stockant en outre une liste de la pluralité d'applications qu'il stocke, la première étape de réalisation comprend en outre une seconde sous-étape de réalisation (52) d'une seconde fonction applicative, cette sous-étape consistant au moins à transmettre sans contact au terminal local la liste des applications, le terminal local étant agencé pour sélectionner, parmi les équipements portables avec chacun desquels il a ouvert un canal de communication, uniquement les équipements portables possédant des applications reconnues par le terminal local.

18. Procédé de communication selon la revendication 16 ou la revendication 17, **caractérisé en ce que**, le premier support de mémorisation de chaque équipement portable stockant en outre un gabarit représentatif de données d'authentification du titulaire de l'équipement portable, la première étape de réalisation comprend en outre une troisième sous-étape de réalisation (53) d'une troisième fonction applicative, cette sous-étape consistant à authentifier, pour le terminal local, l'utilisateur de cet équipement portable, au moins sur la base des données d'authentification du titulaire de l'équipement portable.

19. Procédé de communication selon la revendication 18, **caractérisé en ce qu'**il comprend une étape d'ouverture d'une session transactionnelle (8) réalisée par le terminal local avec chaque équipement portable authentifié dont l'utilisateur a été authentifié, donnant au terminal local accès à l'application ou aux applications détenues par chacun desdits équipements portables.

20. Procédé de communication selon la revendication 19, **caractérisé en ce qu'**il comprend en outre, si l'utilisateur authentifié porte plusieurs équipements portables authentifiés, une étape de sélection de l'équipement portable à utiliser pour la transaction, cette étape consistant soit en un choix proposé à l'utilisateur par le terminal local, soit en un choix réalisé par le terminal local, lui-même, s'il possède des données pour prendre cette décision.

21. Procédé de communication selon la revendication 19 ou la revendication 20, **caractérisé en ce qu'**il comprend en outre, si l'équipement portable sélectionné détient plusieurs applications reconnues par le terminal local, une étape de sélection d'au moins une application, cette étape consistant soit en un choix proposé à l'utilisateur par le terminal local, soit en un choix réalisé par le terminal local, lui-même, s'il possède des données pour prendre cette décision, ladite au moins une application sélectionnée étant réalisée par les premiers moyens de traitement qui lisent les données écrites sur le second support de mémorisation par les seconds moyens de traitement afin de réaliser au moins une transaction applicative avec le terminal local selon ladite au moins une application sélectionnée.

22. Procédé de communication selon l'une quelconque des revendications précédentes, **caractérisé en ce qu'**il comprend une étape d'effacement des données écrites sur le second support de mémorisation par les seconds moyens de traitement lorsque le procédé de communication est terminé ou interrompu.

## Patentansprüche

1. Tragbare Vorrichtung (2) zur Kommunikation mit einem lokalen Endgerät (1), wobei die tragbare Vorrichtung einem Diensteanbieter und einem Inhaber zugeordnet ist und von einem Benutzer verwendet wird,
wobei die tragbare Vorrichtung mindestens umfasst:
- ein erstes Speichermedium (21) zum Speichern von mindestens einer Vielzahl von Anwendungen,
- erste Verarbeitungsmittel (22), die dafür eingerichtet sind, eine Anwendungstransaktion mit dem lokalen Endgerät gemäß einer Anwendung aus der Vielzahl von Anwendungen auszuführen, und
- zweite kontaktlose Kommunikationsmittel (23), die dafür eingerichtet sind, Daten kontaktlos an das lokale Endgerät zu übertragen,
wobei die tragbare Vorrichtung **dadurch gekennzeichnet ist, dass** sie weiter umfasst:
- zweite Verarbeitungsmittel (24), die sich von den ersten Verarbeitungsmitteln unterscheiden und dafür eingerichtet sind, mindestens eine Anwendungsfunktion mit dem lokalen Endgerät auszuführen, und
- ein zweites Speichermedium (25), das für die zweiten Verarbeitungsmittel nur im Schreibzugriff und für die ersten Verarbeitungsmittel nur im Lesezugriff zugänglich ist,
wobei die zweiten Verarbeitungsmittel (24) in der Lage sind, Daten, die für das Ergebnis der mindestens einen Anwendungsfunktion repräsentativ sind, auf das zweite Speichermedium zu schreiben, und die ersten Verarbeitungsmittel (22) in der Lage sind, diese Daten auf dem zweiten Speichermedium zu lesen, um mindestens eine Anwendungstransaktion mit dem lokalen Endgerät gemäß mindestens einer Anwendung aus der Vielzahl von Anwendungen auszuführen.

2. Tragbare Kommunikationsvorrichtung nach Anspruch 1, **dadurch gekennzeichnet, dass** sie weiter kontaktbehaftete Kommunikationsmittel (26) umfasst, über die von den ersten Verarbeitungsmitteln mindestens eine Anwendungstransaktion mit dem lokalen Endgerät gemäß mindestens einer Anwendung aus der Vielzahl von Anwendungen ausgeführt wird.

3. Kommunikationssystem, das ein lokales Endgerät (1) und eine Vielzahl von tragbaren Vorrichtungen (2, 31) umfasst, wobei jede tragbare Vorrichtung einem Diensteanbieter und einem Inhaber zugeordnet ist und von einem Benutzer verwendet wird,
wobei das lokale Endgerät (1) mindestens umfasst:
- einen Detektor (11), der dafür eingerichtet ist, die tragbaren Vorrichtungen zu erfassen, die sich in einem Abdeckungsbereich des lokalen Endgeräts befinden, und
- erste kontaktlose Kommunikationsmittel (12), die dafür eingerichtet sind, Daten kontaktlos an jede tragbare Vorrichtung zu übertragen,
wobei jede tragbare Vorrichtung (2) mindestens umfasst:
- ein erstes Speichermedium (21) zum Speichern von mindestens einer Vielzahl von Anwendungen,
- erste Verarbeitungsmittel (22), die dafür eingerichtet sind, eine Anwendungstransaktion mit dem lokalen Endgerät gemäß einer Anwendung aus der Vielzahl von Anwendungen auszuführen, und
- zweite kontaktlose Kommunikationsmittel (23), die dafür eingerichtet sind, Daten kontaktlos an das lokale Endgerät zu übertragen,
wobei das Kommunikationssystem **dadurch gekennzeichnet ist, dass** jede tragbare Vorrichtung weiter umfasst:
- zweite Verarbeitungsmittel (24), die sich von den ersten Verarbeitungsmitteln unterscheiden und dafür eingerichtet sind, mindestens eine Anwendungsfunktion mit dem lokalen Endgerät auszuführen, und
- ein zweites Speichermedium (25), das für die zweiten Verarbeitungsmittel nur im Schreibzugriff und für die ersten Verarbeitungsmittel nur im Lesezugriff zugänglich ist,
wobei die zweiten Verarbeitungsmittel (24) in der Lage sind, Daten, die für das Ergebnis der mindestens einen Anwendungsfunktion repräsentativ sind, auf das zweite Speichermedium zu schreiben, und die ersten Verarbeitungsmittel (22) in der Lage sind, diese Daten auf dem zweiten Speichermedium zu lesen, um mindestens eine Anwendungstransaktion mit dem lokalen Endgerät gemäß mindestens einer Anwendung aus der Vielzahl von Anwendungen auszuführen.

4. Kommunikationssystem nach Anspruch 3, **dadurch gekennzeichnet, dass** jede tragbare Vorrichtung weiter kontaktbehaftete Kommunikationsmittel (26) umfasst, über die von den ersten Verarbeitungsmitteln mindestens eine Anwendungstransaktion mit dem lokalen Endgerät gemäß mindestens einer Anwendung aus der Vielzahl von Anwendungen ausgeführt wird.

5. Kommunikationssystem nach Anspruch 3 oder Anspruch 4, **dadurch gekennzeichnet, dass** das erste Speichermedium (21) jeder tragbaren Vorrichtung Authentifizierungsinformationen der tragbaren Vorrichtung und des zugeordneten Diensteanbieters speichert, und eine erste Anwendungsfunktion darin besteht, die tragbare Vorrichtung für das lokale Endgerät mindestens auf der Basis der Authentifizierungsdaten der tragbaren Vorrichtung und des zugeordneten Diensteanbieters zu authentifizieren.

6. Kommunikationssystem nach einem der Ansprüche 3 bis 5, **dadurch gekennzeichnet, dass** das lokale Endgerät in der Lage ist, einen kontaktlosen Kommunikationskanal zwischen dem lokalen Endgerät und jeder authentifizierten tragbaren Vorrichtung zu eröffnen.

7. Kommunikationssystem nach einem der Ansprüche 3 bis 6, **dadurch gekennzeichnet, dass** das erste Speichermedium (21) jeder tragbaren Vorrichtung eine Liste der Vielzahl von Anwendungen speichert, welche sie speichert, und eine zweite Anwendungsfunktion mindestens darin besteht, die Liste der Anwendungen kontaktlos an das lokale Endgerät zu übertragen, wobei das lokale Endgerät dafür eingerichtet ist, aus den tragbaren Vorrichtungen, mit jeder von denen es einen Kommunikationskanal eröffnet hat, die tragbaren Vorrichtungen auszuwählen, welche mindestens eine vom lokalen Endgerät erkannte Anwendung besitzen.

8. Kommunikationssystem nach einem der Ansprüche 3 bis 7, **dadurch gekennzeichnet, dass** das erste Speichermedium (21) jeder tragbaren Vorrichtung ein Template speichert, das für Authentifizierungsdaten des Inhabers der tragbaren Vorrichtung repräsentativ ist, und eine dritte Anwendungsfunktion darin besteht, für das lokale Endgerät den Benutzer dieser tragbaren Vorrichtung mindestens auf der Basis der Authentifizierungsdaten des Inhabers der tragbaren Vorrichtung zu authentifizieren.

9. Kommunikationssystem nach Anspruch 8, **dadurch gekennzeichnet, dass** das lokale Endgerät in der Lage ist, eine Transaktionssitzung mit jeder authentifizierten tragbaren Vorrichtung, deren Benutzer authentifiziert wurde, zu eröffnen, die dem lokalen Endgerät Zugriff auf die Anwendung oder auf die Anwendungen gibt, die von jeder der tragbaren Vorrichtungen gehalten werden.

10. Kommunikationssystem nach Anspruch 9, **dadurch gekennzeichnet, dass** wenn der authentifizierte Benutzer mehrere authentifizierte tragbare Vorrichtungen trägt, das lokale Endgerät (1) entweder dem Benutzer vorschlägt, die für die Transaktion zu verwendende tragbare Vorrichtung auszuwählen, oder das lokale Endgerät die für die Transaktion zu verwendende tragbare Vorrichtung selbst auswählt, wenn es Daten besitzt, um diese Entscheidung zu treffen.

11. Kommunikationssystem nach Anspruch 9 oder Anspruch 10, **dadurch gekennzeichnet, dass** wenn die ausgewählte tragbare Vorrichtung mehrere vom lokalen Endgerät erkannte Anwendungen hält, das lokale Endgerät entweder dem Benutzer vorschlägt, mindestens eine Anwendung auszuwählen, oder das lokale Endgerät selbst mindestens eine Anwendung auswählt, wenn es Daten besitzt, um diese Entscheidung zu treffen, wobei die mindestens eine ausgewählte Anwendung von den ersten Verarbeitungsmitteln (22) ausgeführt wird, die die von den zweiten Verarbeitungsmitteln auf das zweite Speichermedium geschriebenen Daten lesen, um mindestens eine Anwendungstransaktion mit dem lokalen Endgerät gemäß der mindestens einen ausgewählten Anwendung auszuführen.

12. Kommunikationssystem nach einem der vorstehenden Ansprüche, **dadurch gekennzeichnet, dass** die zweiten Verarbeitungsmittel in der Lage sind, die auf das zweite Speichermedium geschriebenen Daten zu löschen, wenn die Kommunikation mit dem lokalen Endgerät beendet oder unterbrochen wird.

13. Kommunikationsverfahren, das in einem Kommunikationssystem umgesetzt wird, welches ein lokales Endgerät (1) und eine Vielzahl von tragbaren Vorrichtungen (2, 31) umfasst, wobei jede tragbare Vorrichtung einem Diensteanbieter und einem Inhaber zugeordnet ist und von einem Benutzer verwendet wird,
wobei das lokale Endgerät (1) mindestens umfasst:
- einen Detektor (11), der dafür eingerichtet ist, die tragbaren Vorrichtungen zu erfassen, die sich in einem Abdeckungsbereich des lokalen Endgeräts befinden, und
- erste kontaktlose Kommunikationsmittel (12), die dafür eingerichtet sind, Daten kontaktlos an jede tragbare Vorrichtung zu übertragen,
wobei jede tragbare Vorrichtung (2) mindestens umfasst:
- ein erstes Speichermedium (21) zum Speichern von mindestens einer Vielzahl von Anwendungen,
- erste Verarbeitungsmittel (22), die dafür eingerichtet sind, eine Anwendungstransaktion mit dem lokalen Endgerät gemäß einer Anwendung aus der Vielzahl von Anwendungen auszuführen, und
- zweite kontaktlose Kommunikationsmittel (23), die dafür eingerichtet sind, Daten kontaktlos an das lokale Endgerät zu übertragen,
wobei das Kommunikationsverfahren **dadurch gekennzeichnet ist, dass** es mindestens umfasst:
- einen ersten Schritt des Ausführens von mindestens einer Anwendungsfunktion, wobei jede tragbare Vorrichtung weiter zweite Verarbeitungsmittel (24) umfasst, die sich von den ersten Verarbeitungsmitteln (22) unterscheiden und dafür eingerichtet sind, die mindestens eine Anwendungsfunktion auszuführen,
- einen Schritt des Schreibens (7) von Daten, die für das Ergebnis der mindestens einen Anwendungsfunktion repräsentativ sind, wobei jede tragbare Vorrichtung weiter ein zweites Speichermedium umfasst, das für die zweiten Verarbeitungsmittel nur im Schreibzugriff zugänglich ist, sodass der Schreibschritt von den zweiten Verarbeitungsmitteln auf dem zweiten Speichermedium ausgeführt wird, und
- einen Schritt des Lesens (9) der Daten, die für das Ergebnis der mindestens einen Anwendungsfunktion repräsentativ sind, wobei das zweite Speichermedium für die ersten Verarbeitungsmittel nur im Lesezugriff zugänglich ist, sodass der Leseschritt von den ersten Verarbeitungsmitteln auf dem zweiten Speichermedium ausgeführt wird, um mindestens eine Anwendungstransaktion gemäß mindestens einer Anwendung aus der Vielzahl von Anwendungen auszuführen.

14. Kommunikationsverfahren nach Anspruch 13, **dadurch gekennzeichnet, dass**, da jede tragbare Vorrichtung weiter kontaktbehaftete Kommunikationsmittel (26) umfasst, das Verfahren weiter einen zweiten Schritt des Ausführens von mindestens einer Anwendungstransaktion mit dem lokalen Endgerät umfasst, wobei dieser Schritt von den ersten Verarbeitungsmitteln über die kontaktbehafteten Kommunikationsmittel und gemäß mindestens einer Anwendung aus der Vielzahl von Anwendungen ausgeführt wird.

15. Kommunikationsverfahren nach Anspruch 13 oder Anspruch 14, **dadurch gekennzeichnet, dass** der erste Ausführschritt einen ersten Unterschritt des Ausführens (51) einer ersten Anwendungsfunktion umfasst, wobei dieser Unterschritt darin besteht, die tragbare Vorrichtung für das Endgerät mindestens auf der Basis von Authentifizierungsdaten der tragbaren Vorrichtung und des zugeordneten Diensteanbieters zu authentifizieren, wobei diese Daten auf dem ersten Speichermedium jeder tragbaren Vorrichtung gespeichert sind.

16. Kommunikationsverfahren nach Anspruch 15, **dadurch gekennzeichnet, dass** es einen Schritt des Eröffnens eines Kommunikationskanals (6) umfasst, der von dem lokalen Endgerät kontaktlos zwischen dem lokalen Endgerät und jeder authentifizierten tragbaren Vorrichtung ausgeführt wird.

17. Kommunikationsverfahren nach Anspruch 16, **dadurch gekennzeichnet, dass**, da das erste Speichermedium jeder tragbaren Vorrichtung weiter eine Liste der Vielzahl von Anwendungen speichert, welche sie speichert, der erste Ausführschritt weiter einen zweiten Unterschritt des Ausführens (52) einer zweiten Anwendungsfunktion umfasst, wobei dieser Unterschritt mindestens darin besteht, die Liste der Anwendungen kontaktlos an das lokale Endgerät zu übertragen,
wobei das lokale Endgerät dafür eingerichtet ist, aus den tragbaren Vorrichtungen, mit jeder von denen es einen Kommunikationskanal eröffnet hat, nur die tragbaren Vorrichtungen auszuwählen, welche von dem lokalen Endgerät erkannte Anwendung besitzen.

18. Kommunikationsverfahren nach Anspruch 16 oder Anspruch 17, **dadurch gekennzeichnet, dass**, da das erste Speichermedium jeder tragbaren Vorrichtung weiter ein Template speichert, das für Authentifizierungsdaten des Inhabers der tragbaren Vorrichtung repräsentativ ist, der erste Ausführschritt weiter einen dritten Unterschritt des Ausführens (53) einer dritten Anwendungsfunktion umfasst, wobei dieser Unterschritt darin besteht, für das lokale Endgerät den Benutzer dieser tragbaren Vorrichtung mindestens auf der Basis der Authentifizierungsdaten des Inhabers der tragbaren Vorrichtung zu authentifizieren.

19. Kommunikationsverfahren nach Anspruch 18, **dadurch gekennzeichnet, dass** es einen vom lokalen Endgerät ausgeführten Schritt des Eröffnens einer Transaktionssitzung (8) mit jeder authentifizierten tragbaren Vorrichtung umfasst, deren Benutzer authentifiziert wurde, welcher dem lokalen Endgerät Zugriff auf die Anwendung oder auf die Anwendungen gibt, die von jeder der tragbaren Vorrichtungen gehalten werden.

20. Kommunikationsverfahren nach Anspruch 19, **dadurch gekennzeichnet, dass** es, wenn der authentifizierte Benutzer mehrere authentifizierte tragbare Vorrichtungen trägt, weiter einen Schritt des Auswählens der für die Transaktion zu verwendenden tragbaren Vorrichtung umfasst, wobei dieser Schritt entweder in einer Auswahl besteht, die dem Benutzer vom lokalen Endgerät vorgeschlagen wird, oder in einer Auswahl, die von dem lokalen Endgerät selbst ausgeführt wird, wenn es Daten besitzt, um diese Entscheidung zu treffen.

21. Kommunikationsverfahren nach Anspruch 19 oder Anspruch 20, **dadurch gekennzeichnet, dass** es, wenn die ausgewählte tragbare Vorrichtung mehrere vom lokalen Endgerät erkannte Anwendungen hält, weiter einen Schritt des Auswählens von mindestens einer Anwendung umfasst, wobei dieser Schritt entweder in einer Auswahl besteht, die dem Benutzer vom lokalen Endgerät vorgeschlagen wird, oder in einer Auswahl, die von dem lokalen Endgerät selbst ausgeführt wird, wenn es Daten besitzt, um diese Entscheidung zu treffen, wobei die mindestens eine ausgewählte Anwendung von den ersten Verarbeitungsmitteln ausgeführt wird, die die von den zweiten Verarbeitungsmitteln auf das zweite Speichermedium geschriebenen Daten lesen, um mindestens eine Anwendungstransaktion mit dem lokalen Endgerät gemäß der mindestens einen ausgewählten Anwendung auszuführen.

22. Kommunikationsverfahren gemäß einem der vorstehenden Ansprüche, **dadurch gekennzeichnet, dass** es einen Schritt des Löschens der auf das zweite Speichermedium geschriebenen Daten durch die zweiten Verarbeitungsmittel umfasst, wenn das Kommunikationsverfahren beendet oder unterbrochen wird.

## Claims

1. A portable equipment item (2) for communicating with a local terminal (1), the portable equipment item being associated with a service provider and with a holder and being used by a user,
the portable equipment item comprising at least:
- a first storage medium (21) for storing at least a plurality of applications,
- first processing means (22) arranged to execute an application transaction with the local terminal, according to one application out of said plurality of applications, and
- second contactless communication means (23) arranged to contactlessly transmit data to the local terminal,
the portable equipment item being **characterized in that** it also comprises:
- second processing means (24) distinct from the first processing means and arranged to execute at least one application function with the local terminal, and
- a second storage medium (25) accessible only in write mode for the second processing means and only in read mode for the first processing means, said second processing means (24) being suitable for writing to the second storage medium data representative of the result of said at least one application function and the first processing means (22) being suitable for reading these data on the second storage medium in order to execute at least one application transaction with the local terminal according to at least one application out of said plurality of applications.

2. The portable communication equipment item as claimed in claim 1, **characterized in that** it also comprises contact-based communication means (26) via which at least one application transaction with the local terminal is executed by the first processing means according to at least one application out of said plurality of applications.

3. A communication system comprising a local terminal (1) and a plurality of portable equipment items (2, 31), each portable equipment item being associated with a service provider and with a holder and being used by a user,
the local terminal (1) comprising at least:
- a detector (11) arranged to detect the portable equipment items located within a coverage area of the local terminal, and
- first contactless communication means (12) arranged to contactlessly transmit data to each portable equipment item,
each portable equipment item (2) comprising at least:
- a first storage medium (21) for storing at least a plurality of applications,
- first processing means (22) arranged to execute an application transaction with the local terminal, according to one application out of said plurality of applications, and
- second contactless communication means (23) arranged to contactlessly transmit data to the local terminal,
said communication system being **characterized in that** each portable equipment item also comprises:
- second processing means (24) distinct from the first processing means and arranged to execute at least one application function with the local terminal, and
- a second storage medium (25) accessible only in write mode for the second processing means and only in read mode for the first processing means, said second processing means (24) being suitable for writing to the second storage medium data representative of the result of said at least one application function and the first processing means (22) being suitable for reading these data on the second storage medium in order to execute at least one application transaction with the local terminal according to at least one application out of said plurality of applications.

4. The communication system as claimed in claim 3, **characterized in that** each portable equipment item also comprises contact-based communication means (26) via which at least one application transaction with the local terminal is executed by the first processing means according to at least one application out of said plurality of applications.

5. The communication system as claimed in claim 3 or claim 4, **characterized in that** the first storage medium (21) of each portable equipment item stores authentication data of the portable equipment item and of the associated service provider and a first application function consists in authenticating the portable equipment item for the local terminal, at least on the basis of the authentication data of the portable equipment item and of the associated service provider.

6. The communication system as claimed in one of claims 3 to 5, **characterized in that** the local terminal is suitable for opening a contactless communication channel between the local terminal and each authenticated portable equipment item.

7. The communication system as claimed in one of claims 3 to 6, **characterized in that** the first storage medium (21) of each portable equipment item stores a list of the plurality of applications that it stores and a second application function consists at least in contactlessly transmitting the list of the applications to the local terminal, the local terminal being arranged to select, from the portable equipment items with each of which it has opened a communication channel, the portable equipment items having at least one application recognized by the local terminal.

8. The communication system as claimed in one of claims 3 to 7, **characterized in that** the first storage medium (21) of each portable equipment item stores a template representative of authentication data of the holder of the portable equipment item and a third application function consists in authenticating, for the local terminal, the user of this portable equipment item, at least on the basis of the authentication data of the holder of the portable equipment item.

9. The communication system as claimed in claim 8, **characterized in that** the local terminal is suitable for opening a transactional session with each authenticated portable equipment item for which the user has been authenticated, giving the local terminal access to the application or to the applications held by each of said portable equipment items.

10. The communication system as claimed in claim 9, **characterized in that**, if the authenticated user carry a number of authenticated portable equipment items, the local terminal (1) either prompts the user to select the portable equipment item to be used for the transaction, or the local terminal itself chooses the portable equipment item to be used for the transaction when it has the data to take this decision.

11. The communication system as claimed in claim 9 or claim 10, **characterized in that**, if the selected portable equipment item holds a number of applications recognized by the local terminal, either the local terminal prompts the user to select at least one application, or the local terminal itself chooses at least one application when it has the data to take this decision, said at least one selected application being executed by the first processing means (22) which read the data written on the second storage medium by the second processing means in order to execute at least one application transaction with the local terminal according to said at least one selected application.

12. The communication system as claimed in any one of the preceding claims, **characterized in that** the second processing means are suitable for erasing the data written on the second storage medium when the communication with the local terminal is terminated or interrupted.

13. A communication method, implemented in a communication system comprising a local terminal (1) and a plurality of portable equipment items (2, 31), each portable equipment item being associated with a service provider and with a holder, and being used by a user,
the local terminal (1) comprising at least:
- a detector (11) arranged to detect the portable equipment items located in a coverage area of the local terminal, and
- first contactless communication means (12) arranged to contactlessly transmit data to each portable equipment item,
each portable equipment item (2) comprising at least:
a first storage medium (21) for storing at least a plurality of applications,
- first processing means (22) arranged to execute an application transaction with the local terminal, according to one application out of said plurality of applications, and
- second contactless communication means (23) arranged to contactlessly transmit data to the local terminal,
said communication method being **characterized in that** it comprises at least:
- a first step of executing at least one application function, each portable equipment item also comprising second processing means (24) distinct from the first processing means (22) and arranged to execute said at least one application function,
- a step (7) of writing data representative of the result of said at least one application function, each portable equipment item also comprising a second storage medium accessible only in write mode for the second processing means, so that the writing step is executed by the second processing means on the second storage medium, and
- a step (9) of reading data representative of the result of said at least one application function, the second storage medium being accessible only in read mode for the first processing means, so that the reading step is executed by the first processing means on the second storage medium in order to execute at least one application transaction according to at least one application out of said plurality of applications.

14. The communication method as claimed in claim 13, **characterized in that**, each portable equipment item also comprising contact-based communication means (26), the method also comprises a second step of executing at least one application transaction with the local terminal, this step being executed by the first processing means via the contact-based communication means and according to at least one application out of said plurality of applications.

15. The communication method as claimed in claim 13 or claim 14, **characterized in that** the first execution step comprises a first substep (51) of executing a first application function, this substep consisting in authenticating the portable equipment item for the terminal, at least on the basis of authentication data of the portable equipment item and of the associated service provider, these data being stored on the first storage medium of each portable equipment item.

16. The communication method as claimed in claim 15, **characterized in that** it comprises a step of opening a communication channel (6) executed by the contactless local terminal between the local terminal and each authenticated portable equipment item.

17. The communication method as claimed in claim 16, **characterized in that**, the first storage medium of each portable equipment item also storing a list of the plurality of applications that it stores, the first execution step also comprises a second substep (52) of executing a second application function, this substep consisting at least in contactlessly transmitting to the local terminal the list of the applications, the local terminal being arranged to select, from the portable equipment items with each of which it has opened a communication channel, only the portable equipment items that have applications recognized by the local terminal.

18. The communication method as claimed in claim 16 or claim 17, **characterized in that**, the first storage medium of each portable equipment item also storing a template representative of authentication data of the holder of the portable equipment item, the first execution step also comprises a third substep (53) of executing a third application function, this substep consisting in authenticating, for the local terminal, the user of this portable equipment item, at least on the basis of the authentication data of the holder of the portable equipment item.

19. The communication method as claimed in claim 18, **characterized in that** it comprises a step of opening a transactional session (8) executed by the local terminal with each authenticated portable equipment item for which the user has been authenticated, giving the local terminal access to the application or to the applications held by each of said portable equipment items.

20. The communication method as claimed in claim 19, **characterized in that** it also comprises, if the authenticated user carries a number of authenticated portable equipment items, a step of selecting the portable equipment item to be used for the transaction, this step consisting either of a choice offered to the user by the local terminal, or of a choice made by the local terminal, itself, if it has data to take this decision.

21. The communication method as claimed in claim 19 or claim 20, **characterized in that** it also comprises, if the selected portable equipment item holds a number of applications recognized by the local terminal, a step of selecting at least one application, this step consisting either of a choice offered to the user by the local terminal, or of a choice made by the local terminal, itself, if it has data to take this decision, said at least one selected application being executed by the first processing means which read the data written on the second storage medium by the second processing means in order to execute at least one application transaction with the local terminal according to said at least one selected application.

22. The communication method as claimed in one of the preceding claims, **characterized in that** it comprises a step of erasing the data written on the second storage medium by the second processing means when the communication method is terminated or interrupted.
